(19) Europäisches Patentamt
European Patent Office
Office européen des brevets

(11) Veröffentlichungsnummer: **0 555 705 B1**

(12) **EUROPÄISCHE PATENTSCHRIFT**

(45) Veröffentlichungstag der Patentschrift: **20.12.95**

(51) Int. Cl.[6]: **C08G 18/62**, C08G 18/80, C09D 175/04

(21) Anmeldenummer: **93101438.5**

(22) Anmeldetag: **29.01.93**

(54) **Pulverlack, ein Verfahren zu seiner Herstellung und seine Verwendung**

(30) Priorität: **11.02.92 DE 4203876**

(43) Veröffentlichungstag der Anmeldung:
**18.08.93 Patentblatt 93/33**

(45) Bekanntmachung des Hinweises auf die
Patenterteilung:
**20.12.95 Patentblatt 95/51**

(84) Benannte Vertragsstaaten:
**AT BE CH DE ES FR GB IT LI NL SE**

(56) Entgegenhaltungen:
**EP-A- 0 409 745**
**WO-A-92/01757**
**US-A- 3 993 849**

(73) Patentinhaber: **BAYER AG**

**D-51368 Leverkusen (DE)**

(72) Erfinder: **Wamprecht, Christian, Dr.**
**Regattastrasse 20**
**W-4040 Neuss 22 (DE)**
Erfinder: **Halpaap, Reinhard, Dr.**
**In der Hildscheid 6**
**W-5068 Odenthal-Glöbusch (DE)**
Erfinder: **Meier-Westhues, Hans-Ulrich, Dr.**
**Am Rosenhügel 10**
**W-5090 Leverkusen 3 (DE)**
Erfinder: **Schultz, Wolfgang**
**Erlenweinstrasse 23**
**W-4150 Krefeld 11 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 555 705 B1

**Beschreibung**

Die Erfindung betrifft einen neuen Pulverlack auf Basis von hydroxyfunktionellen Polyacrylaten, hydroxyfunktionellen Polyestern, mit Ketoximen blockierten aliphatischen und cycloaliphatischen Polyisocyanaten, ein Verfahren zu seiner Herstellung, sowie seine Verwendung zur Herstellung von Beschichtungen auf hitzeresistenten Substraten.

Oxim-blockierte Polyisocyanate und ihre Verwendung in Pulverlacken sind bereits bekannt (z.B. EP-A-432 257 (WO 91/00267), US-PS 38 57 818, DE-OS 22 00 342 oder Japanische Patentanmeldung 70-94941, Veröffentlichungsnummer 75-27057 (C.A. 84: 107 163 s)). Häufig werden diese Polyisocyanate mit hydroxyfunktionellen Polyestern kombiniert als Pulverlacke eingesetzt. Die erhaltenen Beschichtungen weisen jedoch nur eine unzureichende Licht- und Wetterstabilität auf und sind z.B. für Außenanwendungen im Kraftfahrzeugbereich nicht geeignet.

In einigen dieser Veröffentlichungen wird auch die Kombination der oximblockierten Polyisocyanate mit hydroxyfunktionellen Copolymerisaten erwähnt. So beschreibt beispielsweise die letztgenannte Japanische Publikation die Kombination von (i) Xylylendiisocyanat, dessen Isocyanatgruppen teilweise mit einem speziellen Oxim blockiert sind, mit (ii) einem hydroxyfunktionellen Polyacrylat. Beispiel 4 der US-PS 38 57 818 beschreibt die Kombination (i) eines hochschmelzenden, Butanonoximblockierten Isocyanat-Prepolymeren auf Basis von 4,4'-Diisocyanato-dicyclohexylmethan mit (ii) einem bei Raumtemperatur festen hydroxyfunktionellen Polyacrylat.

Derartige Pulverlacke weisen insbesondere den Nachteil auf, daß sie erst bei relativ hohen Temperaturen eingebrannt werden können, weil wegen der hohen Schmelzpunkte der Einzelkomponenten bei mäßig erhöhten Temperaturen nur schlechte Verlaufseigenschaften resultieren.

Dabei kommt es dann sehr häufig zur Bildung von Blasen in den Lackfilmen, die von entweichendem Blockierungsmittel verursacht werden.

Weiterhin ist von Nachteil, daß mit derartigen Pulverlacken nur spröde, unflexible Lackfilme erhalten werden, die z.B. für die Lackierung von Automobilen, wo Lacke mit zähelastischem, flexiblem Eigenschaftsniveau benötigt werden, nicht geeignet sind.

Lösungsmöglichkeiten für unzureichenden Verlauf und nicht akzeptable Flexibilitätswerte von PUR-Pulverlacken auf Polyacrylatbasis liefern die US-Patente 39 93 849 und 39 98 768. Sie beschreiben Polyolmischungen, bestehend aus OH-funktionellen Polyacrylaten und OH-funktionellen Polyestern, die als Bindemittelkomponenten mit Oxim-blockierten Polyisocyanaten kombiniert werden. Bei der US-Patentschrift 39 98 768 besteht die Polyacrylatkomponente zusätzlich noch aus einem Gemisch aus einem Polyacrylat mit hoher Glasübergangstemperatur und einem Polyacrylat mit niedriger Glasübergangstemperatur. Bei beiden Patentschriften enthält die gesamte Bindemittelkombination einen Polyesteranteil von mindestens 10 und höchstens 30 Gew.-%.

Polyesteranteile in diesen Mengen können sich jedoch schon negativ auf die Witterungsbeständigkeit, speziell auf die Vergilbungsneigung von Automobildecklacken im Außeneinsatz auswirken, so daß Pulverlackbindemittel gemäß diesen US-Patentschriften nur bedingt für den Außeneinsatz geeignet sind.

Es war daher die der Erfindung zugrundeliegende Aufgabe, neue Pulverlacke zur Verfügung zu stellen, die einerseits bei vergleichsweise niedrigen Temperaturen von 120 bis 160°C ausgehärtet werden können und andererseits bereits auch bei diesen Temperaturen einwandfrei verlaufen und die Herstellung von hochwertigen, blasenfreien und insbesondere lösungsmittel-, chemikalien- und witterungsbeständigen Lackfilmen gestatten.

Diese Aufgabe konnte durch die Bereitstellung der nachstehend näher beschriebenen erfindungsgemäßen Pulverlacke gelöst werden.

Es wurde überraschenderweise gefunden, daß schon geringe Anteile von OH-funktionellen Polyestern, d.h. weniger als 10 Gew.-%, die Verlaufseigenschaften und das Flexibilitätsniveau von PUR-Pulverlacken auf Basis von OH-funktionellen Polyacrylaten und Oxim-blockierten Polyisocyanaten wesentlich verbessern und daß mit höheren Polyesteranteilen keine weiteren Verbesserungen mehr erzielt werden können, sondern eher schlechtere Bewitterungsergebnisse und erhöhte Vergilbungsneigung bei Temperaturbelastung die Folgen sind.

Gegenstand der Erfindung ist daher ein Pulverlack mit einer Glasübergangstemperatur von 20 bis 80°C, bestehend im wesentlichen aus A) einer Polyacrylatpolyolkomponente, B) einer Polyesterpolyolkomponente, C) einer Polyisocyanatkomponente mit blockierten Isocyanatgruppen, D) einer Katalysatorkomponente, bestehend aus mindestens einem Katalysator für die Reaktion zwischen blockierten Isocyanatgruppen und Hydroxylgruppen, und gegebenenfalls E) weiteren aus der Lacktechnologie bekannten Hilfs-und Zusatzmitteln, wobei die Komponenten A), B) und C) in solchen Mengen vorliegen, daß ein Äquivalentverhältnis von blockierten Isocyanatgruppen zu Hydroxylgruppen von 0,5:1 bis 1,5:1 vorliegt, dadurch gekenn-

2

zeichnet, daß er als wesentliche Bindemittelkomponenten

A) 56 bis 86,9 Gew.-% einer Polyacrylatpolyolkomponente mit einer Hydroxylzahl von 30 bis 155 und einer Glasübergangstemperatur von 30 bis 120°C,

B) 0,1 bis 9 Gew.-% einer Polyesterpolyolkomponente mit einer Hydroxylzahl von 40 bis 180 und einer Glasübergangstemperatur von -40 bis 80°C und

C) 13 bis 35 Gew.-% einer Polyisocyanatkomponente mit einer Glasübergangstemperatur von -40 bis 60°C, bestehend aus mindestens einem Ketoxim-blockierten Polyisocyanat, ausgewählt aus der Gruppe bestehend aus (i) Biuret-, Isocyanurat-, Uretdion- und/oder Urethangruppen aufweisenden Lackpolyisocyanaten auf Basis von 1,6-Diisocyanatohexan, (ii) Isocyanuratgruppen und gegebenenfalls Uretdiongruppen aufweisenden Lackpolyisocyanaten auf Basis von Gemischen aus 1,6-Diisocyanatohexan und 1-Isocyanato-3,3,5-trimethyl-5-isocyanatomethylcyclohexan und (iii) Urethangruppen aufweisenden Lackpolyisocyanaten auf Basis von 4,4'-Diisocyanato-dicyclohexylmethan

enthält, wobei sich die Prozentangaben von A) bis C) zu 100 ergänzen.

Gegenstand der Erfindung ist auch ein Verfahren zur Herstellung dieses Pulverlacks, welches dadurch gekennzeichnet ist, daß man zur Herstellung der Pulverlacke die Komponenten A), B), C), D) und gegebenenfalls E) in einem inerten Lösungsmittel oder Lösungsmittelgemisch mit einem zwischen 50 und 150°C liegenden Siedepunkt oder -bereich homogen löst und/oder dispergiert, dann die dabei resultierende Lösung und/oder Dispersion vom Lösungs-bzw. Dispergiermittel befreit und gleichzeitig und/oder anschließend den hierbei anfallenden Feststoff in die Pulverform überführt.

Gegenstand der Erfindung ist auch die Verwendung des erfindungsgemäßen Pulverlacks, gegebenenfalls nach seiner Abmischung mit weiteren Hilfs- und Zusatzmitteln zur Herstellung von Beschichtungen auf beliebigen hitzeresistenten Substraten nach den Methoden der Pulverlacktechnologie, insbesondere zur Herstellung von Klarlacken auf Automobilkarosserieteilen.

Die Polyolkomponente A) weist eine Hydroxylzahl von 30 bis 155, vorzugsweise von 40 bis 120 mg KOH/g und eine nach der Differentialthermoanalyse (DTA) bestimmte Glasübergangstemperatur Tg von 30 bis 120, vorzugsweise 50 bis 100°C auf und wird durch Copolymerisation eines Monomerengemischs, bestehend aus

a) 0 bis 70 Gew.-Teilen Methylmethacrylat,

b) 0 bis 60 Gew.-Teilen (Cyclo)Alkylestern der Acryl- und/oder Methacrylsäure mit 2 bis 18 Kohlenstoffatomen im Alkyl- bzw. Cycloalkylrest,

c) 0 bis 50 Gew.-Teilen Vinylaromaten,

d) 6 bis 40 Gew.-Teilen Hydroxyalkylester der Acryl- und/oder Methacrylsäure,

e) 0 bis 5 Gew.-Teilen olefinisch ungesättigten Carbonsäuren

erhalten, wobei die Summe der Gewichtsteile der Komponenten a) bis e) 100 ergibt.

Vorzugsweise handelt es sich bei der Bindemittelkomponente A) um Copolymerisate aus

a) 10 bis 60 Gew.-Teilen Methylmethacrylat,

b) 5 bis 50 Gew.-Teilen (Cyclo)Alkylestern der Acryl- und/oder Methacrylsäure mit 2 bis 18 Kohlenstoffatomen im (Cyclo)Alkylrest,

c) 5 bis 40 Gew.-Teilen Vinylaromaten,

d) 10 bis 35 Gew.-Teilen Hydroxylalkylester der Acryl- und/oder Methacrylsäure und

e) 0 bis 5,0 Gew.-Teilen Acrylsäure und/oder Methacrylsäure

mit der Maßgabe, daß die Summe der Gew.-Teile aus a) bis e) 100 ergibt.

Bei den Monomeren b) handelt es sich vorzugsweise um (Cyclo)Alkylester der Acryl- oder Methacrylsäure mit 2 bis 18 Kohlenstoffatomen im (Cyclo)Alkylrest. Beispiele geeigneter bzw. bevorzugt geeigneter Monomerer b) sind Ethyl(meth)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Cyclohexylmethacrylat, Neopentylmethacrylat, Isobornylmethacrylat, 3,3,5-Trimethylcyclohexylmethacrylat und Stearylmethacrylat.

Als Monomere c) kommen z.B. Styrol, Vinyltoluol und α-Ethylstyrol in Betracht.

Geeignete Monomere d) sind Hydroxyalkylester der genannten Säuren mit 2 bis 6, vorzugsweise 2 bis 4 Kohlenstoffatomen im Hydroxyalkylrest wie z.B. 2-Hydroxyethyl(meth)acrylat, Hydroxypropyl(meth)acrylat (bei der Anlagerung von Propylenoxid an (Meth)Acrylsäure entstehendes Isomerengemisch), 4-Hydroxy-n-butylacrylat oder auch Anlagerungsprodukte von ε-Caprolacton an derartige einfache Hydroxyalkylester. Der Begriff "Hydroxyalkylester" soll somit auch Estergruppen aufweisende Reste umfassen, wie sie durch Anlagerung von ε-Caprolacton an einfache Hydroxyalkylester entstehen. Weiterhin sind auch Umsetzungsprodukte von Glycidyl(meth)acrylat mit gesättigten Monocarbonsäuren, sowie Umsetzungsprodukte von (Meth)Acrylsäure mit gesättigten Monoepoxiden, die zusätzlich noch OH-Gruppen tragen können als "Hydroxyalkylester" der (Meth)Acrylsäure anzusehen und daher ebenfalls als Monomere d) geeignet.

Besonders bevorzugt besteht die Polyolkomponente A) aus hydroxyfunktionellen Copolymerisaten aus

EP 0 555 705 B1

a) 15 bis 50 Gew.-Teilen Methylmethacrylat,

b) 10 bis 45 Gew.-Teilen an Alkylestern der Acryl- und/oder Methacrylsäure mit 2 bis 12 Kohlenstoffatomen im Alkylrest,

c) 5 bis 35 Gew.-Teilen Styrol,

d) 10 bis 30 Gew.-Teilen 2-Hydroxyethylmethacrylat und/oder Hydroxypropylmethacrylat (= Anlagerungsprodukt von Propylenoxid an Methacrylsäure, bestehend im wesentlichen aus 2-Hydroxypropylmethacrylat und 2-Hydroxy-1-methyl-ethyl-methacrylat im Verhältnis von ca. 3:1) und

e) 0,1 bis 3 Gew.-Teilen Acrylsäure und/oder Methacrylsäure

wobei die Summe der Gewichtsteile der Komponenten a) bis e) 100 ergibt.

Bei der Herstellung der hydroxyfunktionellen Copolymerisate können innerhalb der oben angegebenen Mengenanteilsgrenzen jeweils beliebige Gemische der Monomeren a) bis e) verwendet werden, mit der Maßgabe, daß diese Auswahl bei der Herstellung der Copolymerisate so erfolgt, daß die resultierenden Copolymerisate Hydroxylzahlen und Glasübergangstemperaturen innerhalb der obengenannten Bereiche aufweisen. Diese für die erfindungsgemäße Verwendbarkeit der Copolymerisate wesentliche Bedingung wird dann erfüllt, wenn bei der Herstellung der Copolymerisate ein geeignetes Verhältnis von "weichmachenden" Monomeren, die zur Erniedrigung der Glasübergangstemperatur der Copolymeren führen, zu "hartmachenden" Monomeren, die zur Erhöhung der Glasübergangstemperatur führen, zur Anwendung gelangt.

"Weichmachende" Monomere sind beispielsweise Alkylester der Acrylsäure, wie z.B. Ethylacrylat, n-Butylacrylat, Isobutylacrylat und 2-Ethylhexylacrylat.

"Hartmachende" Monomere sind beispielsweise Alkylester der Methacrylsäure, wie z.B. Methylmethacrylat, Ethylmethacrylat, Isobutylmethacrylat, Cyclohexylmethacrylat, Isopropylmethacrylat, tert.-Butylmethacrylat, Neopentylmethacrylat, Isobornylmethacrylat und 3,3,5-Trimethylcyclohexylmethacrylat, Vinylaromaten, wie z.B. Styrol, Vinyltoluol und $\alpha$-Ethylstyrol.

Die Herstellung der hydroxyfunktionellen Copolymerisate A) erfolgt durch radikalisch initiierte Copolymerisation der obengenannten Monomeren in geeigneten organischen Lösungsmitteln. Dabei werden die Monomeren bei Temperaturen von 60 bis 180°C, vorzugsweise 80 bis 160°C, in Gegenwart von Radikalbildnern und gegebenenfalls Molekulargewichtsreglern copolymerisiert.

Vorzugsweise werden zur Herstellung der Copolymerisate Lösungsmittel der gleichen Art eingesetzt, wie sie auch anschließend zur Durchführung des erfindungsgemäßen Verfahrens benötigt werden. Diese Lösungsmittel weisen bei 1013 mbar einen Siedepunkt oder -bereich innerhalb des Temperaturbereichs von 50 bis 150, vorzugsweise 75 bis 130°C auf. Zur Herstellung der Copolymerisate und auch zur Durchführung des erfindungsgemäßen Verfahrens geeignete Lösungsmittel sind beispielsweise Aromaten, wie Toluol oder Xylol; Ester, wie Methylacetat, Ethylacetat, Isopropylacetat, n-Propylacetat, Isobutylacetat, n-Butylacetat oder Methyl-n-amylacetat; Ketone, wie 2-Propanon, 2-Butanon, 2-Pentanon, 3-Pentanon, 3-Methyl-2-butanon, 4-Methyl-2-pentanon, 5-Methyl-2-hexanon oder 2-Heptanon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. So können chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymer abzuführen.

Man kann beispielsweise auch einen Teil der Monomeren in Lösungsmitteln der genannten Art vorlegen und die restlichen Monomeren und Hilfsmittel getrennt oder gemeinsam in diese Vorlage bei der Reaktionstemperatur eintragen. Im allgemeinen erfolgt die Polymerisation unter Atmosphärendruck, kann jedoch auch bei Drücken bis zu 25 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter, wie z.B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat, tert.-Butylperbenzoat; Hydroperoxide, wie beispielsweise tert.-Butylhydroperoxid, Cumolhydroperoxid; Dialkylperoxide, wie Dicumylperoxid; tert.-Butylcumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge

4

der Monomeren, zugegeben werden.

Bei der Polyesterpolyolkomponente B) handelt es sich um hydroxyfunktionelle Polyester mit einer Hydroxylzahl von 40 bis 180 bei einer Säurezahl von <12, einer Glasübergangstemperatur von -40 bis +80°C und vorzugsweise einem mittleren, aus der Stöchiometrie der eingesetzten Ausgangsmaterialien berechenbaren, Molekulargewicht von 500 bis 4000. Bei der Herstellung der hydroxyfunktionellen Polyester können insgesamt 4 Gruppen von Monomerbestandteilen zur Anwendung kommen:

a) Alkandiole, insbesondere solche des Molekulargewichtsbereichs 62 bis 500, vorzugsweise 62 bis 300, wie z.B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol oder Umsetzungsprodukte dieser Diole des genannten Molekulargewichtsbereichs mit $\epsilon$-Caprolacton, Ethylenoxid oder Propylenoxid;

b) höherwertige Alkohole des Molekulargewichtsbereichs 92 bis 500, insbesondere 92 bis 250 wie z.B. Trimethylolpropan, Glycerin, Pentaerythrit;

c) Dicarbonsäuren, insbesondere solche des Molekulargewichtsbereichs 92 bis 250 bzw. deren Anhydride, wie z.B. Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Terephthalsäure, Fumarsäure, Maleinsäure, Maleinsäureanhydrid, Bernsteinsäure, Bernsteinsäureanhydrid, Adipinsäure und

d) Monocarbonsäuren, insbesondere solche des Molekulargewichtsbereichs 116 bis 300, wie z.B. Benzoesäure, 2-Ethylhexansäure, Capronsäure, Caprylsäure, Caprinsäure oder Laurinsäure.

Bei der Herstellung der Polyesterpolyole B) können jeweils beliebige Gemische der Monomerbestandteile a) bis d) zum Einsatz kommen, mit der Maßgabe, daß die Auswahl so erfolgt, daß die resultierenden Polyester sowohl OH-Zahlen im Bereich von 40 bis 180 bei Säurezahlen von <12 als auch Glasübergangstemperaturen von -40 bis +80°C aufweisen.

Diese für die erfindungsgemäße Verwendung der Polyester wesentliche Bedingung wird dann erfüllt, wenn bei der Herstellung der Polyester ein geeignetes Verhältnis von "weichmachenden" Monomerbestandteilen, die zur Erniedrigung der Glasübergangstemperatur der Polyester führen, zu "hartmachenden" Monomeren, die zur Erhöhung der Glasübergangstemperatur führen, zur Anwendung kommt.

"Weichmachende" Monomerbestandteile sind beispielsweise aliphatische Diole, wie z.B. 1,4-Butandiol, 1,5-Pentandiol und 1,6-Hexandiol oder aliphatische Dicarbonsäuren, wie z.B. Bernsteinsäure oder Adipinsäure.

"Hartmachende" Monomerbestandteile sind beispielsweise cyclische aromatische Dicarbonsäuren, wie z.B. Phthalsäure, Isophthalsäure und Terephthalsäure oder Diole, wie z.B. Cyclohexandiol-1,4, Cyclohexan-1,4-dimethanol oder Neopentylglykol.

Die Herstellung der Polyester B) erfolgt in an sich bekannter Weise nach Methoden, wie sie beispielsweise in "Ullmanns Encyclopädie der technischen Chemie", Verlag Chemie Weinheim, 4. Auflage (1980), Band 19, Seiten 61 ff. oder H. Wagner und H.F. Sarx in "Lackkunstharze", Carl Hanser Verlag, München (1971), Seiten 86-152 ausführlich beschrieben sind. Die Veresterung erfolgt gegebenenfalls in Gegenwart einer katalytischen Menge eines üblichen Veresterungskatalysators, wie beispielsweise Säuren, Basen oder Übergangsmetallverbindungen, wie z.B. Titantetrabutylat bei ca. 80 bis 260°C, vorzugsweise 100 bis 240°C.

Die Veresterungsreaktion wird so lange durchgeführt, bis die angestrebten Werte für die Hydroxyl- und Säurezahl erreicht sind. Das Molekulargewicht der Polyesterpolyole kann aus der Stöchiometrie der Ausgangsmaterialien (unter Berücksichtigung der resultierenden Hydroxyl- und Säurezahlen) berechnet werden.

Bei der Polyisocyanatkomponente C) handelt es sich um vorzugsweise vollständig Ketoxim-blockierte Lackpolyisocyanate, die in derart blockierter Form eine, mittels der Differentialthermoanalyse (DTA) bestimmte, Glasübergangstemperatur Tg von -40 bis +60, vorzugsweise -45 bis +45 und insbesondere von -40 bis +20°C, eine mittlere Funktionalität von 2,0 bis 5,0, vorzugsweise 2,0 bis 4,5 und einen Gehalt an blockierten Isocyanatgruppen (berechnet als NCO, Molekulargewicht = 42) von 5,0 bis 20,0, vorzugsweise 8,0 bis 18,0 Gew.-% aufweisen.

Die Polyisocyanatkomponente C) besteht aus mindestens einem Polyisocyanat, ausgewählt aus der Gruppe bestehend aus (i) Biuret-, Isocyanurat-, Uretdion- und/oder Urethangruppen aufweisenden Polyisocyanaten auf Basis von 1,6-Diisocyanatohexan mit Ketoxim-blockierten Isocyanatgruppen (ii) aus Isocyanurat- und gegebenenfalls Uretdiongruppen aufweisenden Polyisocyanaten auf Basis von 1,6-Diisocyanatohexan und 1-Isocyanato-3,3,5-trimethyl-5-isocyanatomethylcyclohexan, vorzugsweise im Gewichtsverhältnis der Diisocyanate von 5:1 bis 1:5 und (iii) Urethangruppen aufweisenden Lackpolyisocyanaten auf Basis von 4,4'-Diisocyanato-dicyclohexylmethan jeweils mit ausschließlich Ketoxim-blockierten Isocyanatgruppen. Selbstverständlich ist auch die Verwendung von solchen Ketoxim-blockierten Polyisocyanaten möglich, die im gleichen Molekül mehrere unterschiedliche Gruppierungen der genannten Art enthalten. Die den blockierten Polyisocyanaten zugrundeliegenden unblockierten Polyisocyanate weisen im allgemeinen einen Restgehalt an zu ihrer Herstellung eingesetztem Diisocyanat von maximal 1,0 Gew.-%, vorzugsweise von maximal 0,5 Gew.-% auf. Besonders bevorzugt werden als Komponente C) Butanonoxim-blockierte Biuretpolyisocyanate oder Isocyanuratpolyisocyanate auf Basis von 1,6-Diisocyanatohexan und/oder Urethangruppen aufweisende Polyisocyanate auf Basis 4,4'-Diisocyanato-dicyclohexylmethan eingesetzt.

Die Herstellung der mit Ketoximen zu blockierenden Polyisocyanate erfolgt nach üblichen Verfahren, wie z.B. Biuretisierung, Dimerisierung, Trimerisierung oder Urethanisierung von entsprechenden monomeren Diisocyanaten. Diese Verfahren sind beispielsweise in den nachstehenden Publikationen beschrieben:

- Biuretgruppen aufweisende Polyisocyanate: DE-PS 1 101 394, DE-OS 1 570 632, DE-OS 2 308 015, DE-OS 2 437 130, DE-OS 2 654 745, DE-OS 2 803 103, DE-OS 2 808 801, DE-OS 2 918 739, DE-OS 3 007 679, DE-OS 3 403 277, DE-OS 3 403 278, DE-PS 3 700 209 und EP-A 3505.
- Uretdiongruppen aufweisende Polyisocyanate: DE-OS 2 502 934
- Urethangruppen aufweisende Polyisocyanate: US 3 183 112
- Isocyanuratgruppen aufweisende Polyisocyanate: DE-AS 1 667 309, DE-OS 3 100 262, DE-OS 3 219 608, DE-OS 3 240 613, EP-A 10 589, EP-A 57 653, EP-A 89 297 und EP-A 187 105.
- Urethan- und Isocyanuratgruppen aufweisende Polyisocyanate: EP-A 155 559, DE-OS 3 811 350.
- Urethan- und Biuretgruppen aufweisende Polyisocyanate: EP-A-320 703.

Zur Blockierung der Polyisocyanate gut geeignete Ketoxime sind beispielsweise solche des Molekulargewichtsbereichs 73 bis 200, beispielsweise auf Basis von aliphatischen oder cycloaliphatischen Ketonen wie 2-Propanon, 2-Butanon, 2-Pentanon, 3-Pentanon, 3-Methyl-2-butanon, 4-Methyl-2-pentanon, 3,3-Dimethyl-2-butanon, 2-2-Heptanon, 3-Heptanon, 4-Heptanon, 5-Methyl-3-heptanon, 2,6-Dimethyl-4-heptanon, Cyclopentanon, Cyclohexanon, 3-Methylcyclohexanon, 3,3,5-Trimethylcyclohexanon und 3,5,5-Trimethyl-2-cyclohexen-5-on. Bevorzugte Blockierungsmittel sind Acetonoxim, Butanonoxim und Cyclohexanonoxim.

Die Blockierungsreaktion der Isocyanatgruppen mit den zuvor genannten Blockierungsmitteln erfolgt zweckmäßig bei Temperaturen von 20 bis 120°C, vorzugsweise 20 bis 80°C. Die Blockierungsreaktion kann sowohl lösungsmittelfrei als auch in inerten, organischen Lösungsmitteln der bereits oben beispielhaft genannten Art durchgeführt werden.

Bei den Katalysatoren D) handelt es sich um übliche Katalysatoren für die Additionsreaktion von Hydroxylan Isocyanatgruppen. Zu nennen sind z.B. Metallverbindungen, insbesondere organische Zinnverbindungen und tert. Amine. Als organische Zinnverbindungen kommen vorzugsweise Zinn(II)-salze von Carbonsäuren, wie z.B. Zinn(II)acetat, Zinn(II)-octanoat, Zinn(II)-ethylhexanoat oder Zinn(II)-laurat und Zinn-(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht, gegebenenfalls als Gemische.

Als tert. Amine können z.B. Diazabicyclo(2,2,2)octan oder 1,5-Diazabicyclo(4,3,0)non-5-en eingesetzt werden.

Weitere Vertreter von geeigneten Katalysatoren sowie Einzelheiten über die Wirkungsweise von solchen Katalysatoren sind im Kunststoff-Handbuch-Band VII, herausgegeben von Vieweg und Höchtlen, Carl-Hanser-Verlag, München 1966, z.B. auf den Seiten 96 bis 102, beschrieben.

Bevorzugt werden Zinn(II)octanoat und/oder Dibutylzinn(IV)-dilaurat als Katalysator eingesetzt.

Die Katalysatoren werden im allgemeinen in Mengen von 0,1 bis 5, vorzugsweise 0,2 bis 3 Gew.-%, bezogen auf den Feststoffanteil der Komponenten A) bis C) eingesetzt.

Bei den gegebenenfalls mitzuverwendenden Hilfs- und Zusatzmitteln E) handelt es sich um solche, die in den beim erfindungsgemäßen Verfahren einzusetzenden Lösungsmitteln löslich oder dispergierbar sind. Beispielhaft zu nennen sind Verlaufsmittel, wie z.B. Polybutylacrylat oder solche auf Basis von Polysilikonen, Lichtschutzmittel, wie z.B. sterisch gehinderte Amine oder UV-Absorber, z.B. Benztriazole oder Benzophenone.

Zur Durchführung des erfindungsgemäßen Verfahrens werden die Komponenten A) bis D) und gegebenenfalls E) in einem inerten organischen Lösungsmittel oder Lösungsmittelgemisch der bereits oben beispielhaft genannten Art gelöst oder dispergiert, so daS Lösungen bzw. Dispersionen mit einem Feststoffgehalt von 10 bis 80, vorzugsweise 30 bis 60 Gew.-% resultieren. Vorzugsweise werden diejenigen Lösungsmittel eingesetzt, die bereits zur Herstellung der Copolymerisate C) und/oder gegebenenfalls vorab zum Lösen der Polyisocyanatkomponente C) verwendet worden sind. Bei der Herstellung dieser Lösungen wurden die Mengenverhältnisse der Komponenten A) bis C) so gewählt, daß in den Lösungen ein Äquivalentverhältnis von blockierten Isocyanatgruppen der Komponente C) zu Hydroxylgruppen der Komponenten A) und B) von 0,5:1 bis 1,5:1, vorzugsweise 0,8:1 bis 1,2:1 vorliegt.

Anschließend werden die so erhaltenen Lösungen bzw. Dispersionen einem Lösungsmittelentfernungsprozeß unterworfen, wobei das Lösungsmittel bzw. das Lösungsmittelgemisch möglichst vollständig entfernt wird. Ein solcher Lösungsmittelentfernprozeß kann z.B. sein: Sprühtrocknung, Entgasung in spezieller oder handelsüblichen Ausdampfextrudern oder schlangenrohrverdampfern, Destillation im Vakuum oder Hochvakuum.

Falls bei diesem Lösungsmittelentfernungsprozeß nicht unmittelbar verarbeitungsfähige Pulver anfallen, werden die resultierenden Festkörper im Anschluß an die Lösungsmittelentfernung in an sich bekannter Weise pulverisiert. Schließlich werden die entweder direkt während der Lösungsmittelentfernung anfallenden oder die im Anschluß an die Lösungsmittelentfernung durch Mahlen erhaltenen Pulver gegebenenfalls durch Sieben von groben Anteilen (beispielsweise von Anteilen mit einem über 0,1 mm liegenden Teilchendurchmesser) befreit.

Die so erhaltenen Pulver-Klarlacke weisen eine mittels der Differentialthermoanalyse (DTA) bestimmte Glasübergangstemperatur Tg innerhalb des Bereichs von 2o bis 80°C, vorzugsweise 25 bis 75°C auf. Diese für die erfindungsgemäße Verwendbarkeit der Pulverlacke wesentliche Bedingung wird dann erfüllt, wenn bei der Herstellung der Pulverlacke ein geeignetes Verhältnis bezüglich der Glasübergangstemperaturen der Komponenten A) bis C) zur Anwendung gelangt. Hat beispielsweise die blockierte Polyisocyanatkomponente C) eine Glasübergangstemperatur von unter 25°C, muß ein Copolymerisat A) als Bindemittelkomponente zur Anwendung kommen, das eine höhere Glasübergangstemperatur, z.B. 80°C aufweist, so daß der fertige Pulverlack eine Glasübergangstemperatur erreicht, die in dem obengenannten Bereich liegt.

Die nach dem erfindungsgemäßen Verfahren erhaltenen Pulver-Klarlacke können gewünschtenfalls in geeigneten Extrudern oder Knetern aufgeschmolzen und mit weiteren Hilfs- und Zusatzstoffen, insbesondere mit anorganischen oder organischen Pigmenten vermischt und homogenisiert werden. Im Falle einer derartigen Herstellung von pigmentierten Pulverlacken erfolgt die gegebenenfalls erforderliche Pulverisierung der beim erfindungsgemäßen Verfahren anfallenden Feststoffe selbstverständlich vorzugsweise nach ihrer Vereinigung mit den Pigmenten.

Die pulverförmigen Überzugsmittel können nach üblichen Pulverauftragsverfahren, wie z.B. elektrostatischem Pulversprühen oder Wirbelsintern, auf die zu überziehenden, hitzeresistenten Substrate aufgebracht werden. Die Härtung der Überzüge kann durch Erhitzen auf Temperaturen von 120 bis 200°C, vorzugsweise 120 bis 160°C, erfolgen. Man erhält dabei kratzfeste, lösungsmittel-und chemikalienbeständige Lackfilme mit sehr guten optischen und mechanischen Eigenschaften, die insbesondere eine gute Licht- und Wetterbeständigkeit aufweisen und somit für Außenanwendungen besonders geeignet sind. Erfindungsgemäß können beliebige, hitzeresistente Substrate, wie beispielsweise solche aus Glas oder Metallen, beschichtet werden. Ein bevorzugtes Einsatzgebiet für die erfindungsgemäß hergestellten Pulverlacke in unpigmentierter Form ist die Herstellung von Klarlackschichten bei der Automobillackierung.

Die in den nachfolgenden Beispielen genannten Teile und Prozente sind sofern nicht anders angegeben, Gewichtsteile bzw. Gewichtsprozente.

1. Allgemeine Herstellvorschrift für die Hydroxylgruppen enthaltenden Copolymerisate $A_1$ und $A_2$

In einem 25 l-Edelstahldruckreaktor mit Rühr-, Kühl- und Heizvorrichtung sowie elektronischer Temperatursteuerung wird Teil I vorgelegt und auf Reaktionstemperatur aufgeheizt. Dann werden parallel Teil II (Zugabe über einen Zeitraum von insgesamt 4 Stunden) und Teil III (Zugabe über einen Zeitraum von insgesamt 5 Stunden) bei konstanter Temperatur zudosiert. Anschließend wird 2 Stunden bei der angegebenen Temperatur nachgerührt. Die erhaltenen Polymerlösungen werden zur Mischung mit den Komponenten B), C), D) und gegebenenfalls E) bereitgehalten.

Die Reaktionstemperaturen und die Zusammensetzungen der Teile I bis III sind in Tabelle 1 zusammen mit den Kenndaten der erhaltenen Copolymerisate aufgeführt.

Tabelle 1

| Hydroxylgruppen enthaltende Copolymerisate $A_1$ und $A_2$ (Mengenangaben in g) | | |
|---|---|---|
| Copolymerisate | $A_1$ | $A_2$ |
| Teil I | | |
| Toluol | 9000 | 9000 |
| Teil II | | |
| Methylmethacrylat | 3660 | 4328 |
| n-Butylmethacrylat | 2374 | 2690 |
| Styrol | 1868 | 1258 |
| 2-Hydroxyethylmethacrylat | 1892 | 1418 |
| Acrylsäure | 100 | 98 |
| Teil III | | |
| tert.-Butylperoxy-2-ethylhexanoat (70 %ig in Isododecan) | 438 | 582 |
| Toluol | 668 | 626 |
| Polymerisationstemperatur (°C) | 125 | 110 |
| Festgehalt (%) | 50,7 | 50,1 |
| Viskosität bei 23°C (mPa.s) | 1880 | 1320 |
| OH-Zahl (Festharz) | 80 | 60 |
| Säurezahl (Festharz) | 7,4 | 4,8 |
| Glasübergangstemperatur (°C) | 67 | 66 |

2. Allgemeine Herstellvorschrift für die Hydroxylgruppen enthaltenden Polyester $B_1$ und $B_2$

Die Komponenten werden in einem 15 l-Reaktor, der mit Rührer, Heizung, automatischer Temperatursteuerung, Kolonne und Vorlage ausgerüstet ist, eingewogen und auf 100 bis 150°C erhitzt, wobei eine inhomogene aber gut rührbare Schmelze entsteht. Nach 1 bis 2 Stunden wird die Temperatur unter Abdestillieren von Wasser im Verlauf von 4 bis 8 Stunden auf 200°C erhöht. Die Schmelze wird hierbei homogen und klar. Danach fügt man eine katalytische Menge eines üblichen Umesterungskatalysators (Titantetrabutyrat) zu und setzt die Veresterung unter vermindertem Druck fort. Im Verlauf von 6 bis 8 Stunden senkt man den Druck auf 10 bis 20 mbar und rührt unter diesen Bedingungen weiter, bis die gewünschte Säurezahl erreicht ist.

Man erhält farblose bis schwach gelb gefärbte Polyesterharze, die in üblichen Lacklösemitteln klar löslich sind. Die Zusammensetzungen und Kenndaten der erhaltenen Polyester sind in Tabelle 2 aufgeführt.

Tabelle 2

| Hydroxylgruppen enthaltende Polyester $B_1$ und $B_2$ (Mengenangaben in g) | | |
|---|---|---|
| Polyester | $B_1$ | $B_2$ |
| Hexandiol-1,6 | 4183 | 1157 |
| Neopentylglykol | | 1531 |
| Cyclohexandimethanol | | 2116 |
| Trimethylolpropan | 1188 | 1311 |
| Isophthalsäure | 3678 | |
| Phthalsäureanhydrid | 656 | |
| Adipinsäure | 1295 | 3129 |
| Maleinsäureanhydrid | | 1729 |
| Säurezahl | 3 | 1 |
| OH-Zahl | 143 | 145 |
| Molekulargewicht Mn | 1500 | 1700 |
| Glasübergangstemperatur (°C) | -25 | -29 |

3. Butanonoxim-blockierte Polyisocyanate C)

Polyisocyanat $C_1$

In einen 4 l-Vierhalskolben mit Rührer, Rückflußkühler, Thermometer und Tropftrichter werden 955 g eines Biuretgruppen aufweisenden Polyisocyanats auf Basis von 1,6-Diisocyanatohexan mit einem NCO-Gehalt von ca. 22,0 % und 460 g Toluol eingewogen. Dann werden unter Rühren bei 25°C 445 g Butanonoxim innerhalb 1 Stunde zugetropft. Anschließend wird so lange bei 25°C gerührt, bis IR-spektroskopisch keine NCO-Gruppen mehr nachweisbar sind. Die erhaltene 75 %ige Lösung hat bei 23°C eine Viskosität von 5870 mPa.s und einen blockierten NCO-Gehalt von 11,3 % (berechnet als NCO). Sie kann direkt zur Mischung mit den Polyolkomponenten A) und B) eingesetzt werden. Das gelöst vorliegende, blockierte Polyisocyanat weist lösungsmittelfrei eine Glasübergangstemperatur Tg von 3,1°C auf.

Polyisocyanat $C_2$

Hergestellt analog Polyisocyanat $C_1$, jedoch aus 972 g eines Isocyanuratgruppen aufweisenden Polyisocyanats auf Basis von 1,6-Diisocyanatohexan mit einem NCO-Gehalt von ca. 21,5 %, 470 g Toluol und 445 g Butanonoxim. Es wird eine 75 %ige Lösung erhalten, die bei 23°C eine Viskosität von 1590 mPa.s aufweist und einen blockierten NCO-Gehalt von 11,2 % (berechnet als NCO) besitzt. Das gelöst vorliegende, blockierte Polyisocyanat weist lösungsmittelfrei eine Glasübergangstemperatur Tg von -2,2°C auf.

Polyisocyanat $C_3$

In einem 3 l-Vierhalskolben mit Rührer, Rückflußkühler, Thermometer und Tropftrichter werden 963 g 4,4'-Diisocyanatodicyclohexylmethan vorgelegt und unter Rühren bei Raumtemperatur beginnend 320 g Butanonoxim innerhalb 1 Stunde zugetropft, wobei die exotherme Reaktion durch Kühlen unterhalb 80°C gehalten wird. Nach weiterem 20-minütigem Rühren bei 80°C erreicht man den berechneten NCO-Gehalt von 12,0 %. Bei 80 bis 100°C werden dann 217 g 1,6-Hexandiol innerhalb 30 Minuten portionsweise zugegeben und danach ca. 4 bis 6 Stunden bei 100 bis 110°C nachgerührt. Nach Verschwinden der NCO-Bande im IR-Spektrum wird die warme Schmelze auf ein Blech gegossen und Abkühlen gelassen. Man erhält ein helles Festharz mit einem blockierten NCO-Gehalt von 10,3 % (berechnet als NCO) und einem Schmelzpunkt von 70°C.

4. Erfindungsgemäßes Verfahren und Verwendung der erfindungsgemäßen Pulverlacke

Zur Formulierung der erfindungsgemäßen Pulverlacke werden die Polyacrylatpolyole A), die Polyesterpolyole B), die blockierten Polyisocyanate C), die Katalysatoren D), Toluol als Hilfslösungsmittel sowie gegebenenfalls weitere Hilfsmittel E) jeweils in einem 3 l-Dreihalskolben mit Rührer, Rückflußkühler und Thermometer 1 Stunde bei 60°C gemischt, wobei helle, klare oder leicht trübe Lösungen resultieren. Die so erhaltenen Lösungen werden gegebenenfalls weiter mit Lösungsmittel verdünnt und dann in einem handelsüblichen Sprühtrockner vollständig vom Lösungsmittel befreit, wobei die erfindungsgemäßen Pulverlacke direkt in Form eines verarbeitbaren Pulvers anfallen. Durch Sieben werden die Pulver gegebenenfalls noch von Anteilen mit einem über 0,1 mm liegenden Teilchendurchmesser befreit, dann mittels einer elektrostatischen Sprüheinrichtung auf Prüfbleche appliziert und anschließend 30 Minuten bei 140°C ausgehärtet.

Es werden mit den erfindungsgemäßen Pulverlacken hochglänzende, lösungsmittelbeständige, blasenfreie Lackfilme erhalten, die die typischen zähelastischen, mechanischen Eigenschaften üblicher Polyurethanlacke aufweisen.

Die Lösungsmittelbeständigkeit der ca. 50 µm dicken Lackfilme wird durch einen Wischtest mit einem acetongetränkten Wattebausch geprüft. Angegeben wird die Anzahl der Doppelhübe, nach denen der Lackfilm ohne sichtbare Veränderung bleibt.

Mehr als 50 Doppelhübe pro Film wurden nicht durchgeführt.

In Tabelle 3 sind die jeweiligen Formulierungen sowie die bei den lacktechnischen Prüfungen erhaltenen Prüfergebnisse aufgeführt.

## Tabelle 3

Erfindungsgemäße Pulverlackbindemittel, Zusammensetzungen der lösungsmittelhaltigen Mischungen (Mengenangaben in g)

| Verwendungsbeispiel | 1 | 2 | 3 | 4 | Vergleich |
|---|---|---|---|---|---|
| Polyacrylat $A_1$ | 1375 | 1375 | 1375 | | 1375 |
| Polyacrylat $A_2$ | | | | 1300 | |
| Polyester $B_1$ | 36 | 36 | | 36 | |
| Polyester $B_2$ | | | 36 | | |
| Polyisocyanat $C_1$ | | 405 | | | |
| Polyisocyanat $C_2$ | 415 | | 415 | | 378 |
| Polyisocyanat $C_3$ | | | | 327 | |
| Toluol | 360 | 260 | 360 | 380 | 360 |
| Katalysator $D_1$ (Zinn(II)octanoat) | | 10 | | | 10 |
| Katalysator $D_2$ (Dibutylzinndilaurat) | 10 | | 10 | 10 | |
| Zusatzmittel E (Perenol F 45*) | 5 | 5 | 5 | 5 | 5 |

*) Handelsprodukt der Fa. Henkel, Düsseldorf; Verlaufhilfsmittel auf Polyacrylatbasis

EP 0 555 705 B1

| Glasübergangstemperatur (°C) | 27 | 34 | 27 | 38 | 32 |
|---|---|---|---|---|---|
| Erichsentiefung (mm) | 8,7 | 7,8 | 8,1 | 8,3 | 4,6 |
| Glanz (60°, Gardner) | 100 | 98 | 96 | 97 | 96 |
| Aceton-Wischtest, Anzahl der Doppelhübe | 50 | 50 | 50 | 50 | 50 |

Der Lackfilm des Vergleichsbeispiels ohne Polyesteranteil hat einen wesentlich schlechteren Erichsenwert als die Lackfilme der erfindungsgemäßen Pulverlacke.

**Patentansprüche**

1. Pulverlack mit einer Glasübergangstemperatur von 20 bis 80°C, bestehend im wesentlichen aus A) einer Polyacrylatpolyolkomponente, B) einer Polyesterpolyolkomponente, C) einer Polyisocyanatkomponente mit blockierten Isocyanatgruppen, D) einer Katalysatorkomponente, bestehend aus mindestens einem Katalysator für die Reaktion zwischen blockierten Isocyanatgruppen und Hydroxylgruppen, und gegebenenfalls E) weiteren aus der Lacktechnologie bekannten Hilfs-und Zusatzmitteln, wobei die Komponenten A), B) und C) in solchen Mengen vorliegen, daß ein Äquivalentverhältnis von blockierten Isocyanatgruppen zu Hydroxylgruppen von 0,5:1 bis 1,5:1 vorliegt, dadurch gekennzeichnet, daß er als wesentliche Bindemittelkomponenten

   A) 56 bis 86,9 Gew.-% einer Polyacrylatpolyolkomponente mit einer Hydroxylzahl von 30 bis 155 und einer Glasübergangstemperatur von 30 bis 120°C,
   B) 0,1 bis 9 Gew.-% einer Polyesterpolyolkomponente mit einer Hydroxylzahl von 40 bis 180 und einer Glasübergangstemperatur von -40 bis 80°C und
   C) 13 bis 35 Gew.-% einer Polyisocyanatkomponente mit einer Glasübergangstemperatur von -40 bis 60°C, bestehend aus mindestens einem Ketoximblockierten Polyisocyanat, ausgewählt aus der Gruppe bestehend aus (i) Biuret-, Isocyanurat-, Uretdion- und/oder Urethangruppen aufweisenden Lackpolyisocyanaten auf Basis von 1,6-Diisocyanatohexan, (ii) Isocyanuratgruppen und gegebenenfalls Uretdiongruppen aufweisenden Lackpolyisocyanaten auf Basis von Gemischen aus 1,6-Diisocyanatohexan und 1-Isocyanato-3,3,5-trimethyl-5-isocyanatomethylcyclohexan und (iii) Urethangruppen aufweisenden Lackpolyisocyanaten auf Basis von 4,4'-Diisocyanato-dicyclohexylmethan
   enthält, wobei sich die Prozentangaben von A) bis C) zu 100 ergänzen.

2. Pulverlack gemäß Anspruch 1, dadurch gekennzeichnet, daß die Komponente A) aus einem hydroxyfunktionellen Copolymerisat aus

   a) 0 bis 70 Gew.-Teilen Methylmethacrylat,
   b) 0 bis 60 Gew.-Teilen (Cyclo)Alkylestern der Acryl- und/oder Methacrylsäure mit 2 bis 18 Kohlenstoffatomen im Alkyl- bzw. Cycloalkylrest,
   c) 0 bis 50 Gew.-Teilen Vinylaromaten,
   d) 6 bis 40 Gew.-Teilen Hydroxyalkylester der Acryl- und/oder Methacrylsäure,
   e) 0 bis 5 Gew.-Teilen olefinisch ungesättigten Carbonsäuren
   besteht, mit der Maßgabe, daß die Summe der Gewichtsteile der Komponenten a) bis e) 100 ergibt.

3. Pulverlack gemäß Anspruch 1 und 2, dadurch gekennzeichnet, daß die Komponente A) im wesentlichen aus einem Copolymerisat aus

   a) 10 bis 60 Gew.-Teilen Methylmethacrylat,
   b) 5 bis 50 Gew.-Teilen (Cyclo)Alkylestern der Acryl- und/oder Methacrylsäure mit 2 bis 18 Kohlenstoffatomen im (Cyclo)Alkylrest,
   c) 5 bis 40 Gew.-Teilen Vinylaromaten,
   d) 10 bis 35 Gew.-Teilen Hydroxylalkylester der Acryl- und/oder Methacrylsäure und
   e) 0 bis 5,0 Gew.-Teilen Acrylsäure und/oder Methacrylsäure
   besteht, wobei die Summe der Gew.-Teile der Komponenten a) bis e) 100 ergibt.

4. Pulverlacke gemäß den Ansprüchen 1 bis 3, dadurch gekennzeichnet, daß die Polyesterpolyolkomponente B) aus mindestens einem hydroxyfunktionellen Polyester mit einem zahlengemittelten Molekulargewicht von 500 bis 4000, einer Hydroxylzahl von 40 bis 180 bei einer Säurezahl von <12 und einer Glasübergangstemperatur von -40 bis +80°C besteht.

5. Pulverlacke gemäß den Ansprüchen 1 bis 4, dadurch gekennzeichnet, daß die Komponente C) einen Gehalt an Ketoxim-blockierten Isocyanatgruppen (berechnet aus NCO) von 5 bis 20 Gew.-% bei einer (mittleren) NCO-Funktionalität von 2,0 bis 5,0 aufweist.

6. Pulverlack gemäß den Ansprüchen 1 bis 5, dadurch gekennzeichnet, daß die Komponente C) mindestens ein blockiertes Polyisocyanat, ausgewählt aus der Gruppe bestehend aus Biuretpolyisocyanaten auf Basis von Hexamethylendiisocyanat, Isocyanuratpolyisocyanaten auf Basis von Hexamethylendiisocyanat und Urethangruppen aufweisenden Polyisocyanaten auf Basis von 4,4'-Diisocyanatodicyclohexylmethan, jeweils in Butanonoxim-blockierter Form, darstellt.

7. Pulverlack gemäß den Ansprüchen 1 bis 6, dadurch gekennzeichnet, daß die Komponente D) aus Zinn-(II)octoat und/oder Dibutylzinn(IV)dilaurat besteht.

8. Pulverlack gemäß den Ansprüchen 1 bis 7, dadurch gekennzeichnt, daß als Zusatzmittel E) Verlaufmittel und Lichtschutzmittel, gegebenenfalls neben weiteren Hilfs- und Zusatzmitteln eingesetzt werden.

9. Verfahren zur Herstellung von Pulverlacken gemäß Ansprüchen 1 bis 8, dadurch gekennzeichnet, daß man zur Herstellung der Pulverlacke die Komponenten A), B), C), D) und gegebenenfalls E) in einem inerten Lösungsmittel oder Lösungsmittelgemisch mit einem zwischen 50 und 150°C liegenden Siedepunkt oder -bereich homogen löst und/oder dispergiert, dann die dabei resultierende Lösung und/oder Dispersion vom Lösungs- bzw. Dispergiermittel befreit und gleichzeitig und/oder anschließend den hierbei anfallenden Feststoff in die Pulverform überführt.

10. Verwendung der Pulverlacke gemäß den Ansprüchen 1 bis 8, gegebenenfalls nach ihrer Abmischung mit weiteren Hilfs- und Zusatzmitteln zur Herstellung von Beschichtungen auf beliebigen hitzeresistenten Substraten nach den Methoden der Pulverlacktechnologie, insbesondere zur Herstellung von Klarlacken auf Automobilkarosserieteilen.

## Claims

1. Coating powder with a glass transition temperature of 20 to 80°C, essentially consisting of A) a polyacrylatepolyol component, B) a polyesterpolyol component, C) a polyisocyanate component with blocked isocyanate groups, D) a catalyst component, consisting of at least one catalyst for the reaction between blocked isocyanate groups and hydroxyl groups and optionally E) further auxiliary agents and additives known from paint technology, wherein components A), B) and C) are present in amounts such that a ratio by equivalents of blocked isocyanate groups to hydroxyl groups of 0.5:1 to 1.5:1 is present, characterised in that it, contains as essential binder components,
   A) 56 to 86.9 wt.% of a polyacrylatepolyol component with a hydroxyl number of 30 to 155 and a glass transition temperature of 30 to 120°C,
   B) 0.1 to 9 wt.% of a polyesterpolyol component with a hydroxyl number of 40 to 180 and a glass transition temperature of -40 to 80°C and
   C) 13 to 35 wt.% of a polyisocyanate component with a glass transition temperature of -40 to 60°C, consisting of at least one ketoxime-blocked polyisocyanate, selected from the group consisting of (i) surface coating polyisocyanates based on 1,6-diisocyanatohexane with biuret, isocyanurate, uretdione and/or urethane groups, (ii) surface coating polyisocyanates based on mixtures of 1,6-diisocyanatohexane and 1-isocyanato-3,3,5-trimethyl-5-isocyanato-methylcyclohexane with isocyanurate groups and optionally uretdione groups and (iii) surface coating polyisocyanates based on 4,4'-diisocyanato-dicyclohexylmethane with urethane groups,
   wherein the percentage data for A) to C) add up to 100.

2. A coating powder according to Claim 1, characterised in that component A) consists of a copolymer with functional hydroxyl groups made from
   a) 0 to 70 parts by weight of methyl methacrylate,
   b) 0 to 60 parts by weight of (cyclo)alkyl esters of acrylic and/or methacrylic acid with 2 to 18 carbon atoms in the alkyl or cycloalkyl group,
   c) 0 to 50 parts by weight of vinyl aromatic compounds,
   d) 6 to 40 parts by weight of hydroxyalkyl esters of acrylic and/or methacrylic acid,

e) 0 to 5 parts by weight of olefinically unsaturated carboxylic acids

with the proviso that the sum of the parts by weight of components a) to e) is 100.

3. A coating powder according to Claim 1 and 2, characterised in that component A) essentially consists of a copolymer made from
a) 10 to 60 parts by weight of methyl methacrylate,
b) 5 to 50 parts by weight of (cyclo)alkyl esters of acrylic and/or methacrylic acid with 2 to 18 carbon atoms in the (cyclo)alkyl group,
c) 5 to 40 parts by weight of vinyl aromatic compounds,
d) 10 to 35 parts by weight of hydroxyalkyl esters of acrylic and/or methacrylic acid and
e) 0 to 5.0 parts by weight of acrylic acid and/or methacrylic acid
wherein the sum of the parts by weight of components a) to e) is 100.

4. A coating powder according to Claims 1 to 3, characterised in that the polyesterpolyol component B) consists of at least one polyester with functional hydroxyl groups with a number average molecular weight of 500 to 4000, a hydroxyl number of 40 to 180 for an acid value of <12 and a glass transition temperature of -40 to +80°C.

5. A coating powder according to Claims 1 to 4, characterised in that component C) has a ketoxime-blocked isocyanate group content (calculated as NCO) of 5 to 20 wt.% for an (average) NCO functionality of 2.0 to 5.0.

6. A coating powder according to Claims 1 to 5, characterised in that component C) consists of at least one blocked polyisocyanate selected from the group consisting of biuret polyisocyanates based on hexamethylene diisocyanate, isocyanurate polyisocyanates based on hexamethylene diisocyanate and polyisocyanates which possess urethane groups and are based on 4,4'-diisocyanatodicylohexyl-methane, each being in a butanonoxime-blocked form.

7. A coating powder according to Claims 1 to 6, characterised in that component D) comprises tin(II) octanoate and/or dibutyltin(IV) dilaurate.

8. A coating powder according to Claims 1 to 7, characterised in that the additives E) are flow-control agents and light stabilisers, optionally alongside other auxiliary agents and additives.

9. A process for the preparation of coating powders. according to Claims 1 to 8, characterised in that, to prepare the coating powder, components A), B), C), D) and optionally E) are dissolved and/or dispersed homogeneously in an inert solvent or solvent mixture with a boiling point or boiling range between 50 and 150°C, then solvent or dispersant is removed from the resulting solution and/or dispersion and simultaneously and/or subsequently the solid which is thus produced is converted into the powder form.

10. Use of the coating powders according to Claims 1 to 8, optionally after admixture with further auxiliary agents and additives, to produce coatings on any heat-resistant substrates by means of coating powder techniques, in particular to produce clear lacquers on car body parts.

**Revendications**

1. Vernis en poudre ayant une température de transition du second ordre de 20 à 80°C, consistant essentiellement en A) un composant polyacrylatepolyol, B) un composant polyester-polyol, C) un composant polyisocyanate à groupes isocyanates bloqués, D) un composant catalyseur consistant en au moins un catalyseur de la réaction entre les groupes isocyanates bloqués et les groupes hydroxy, et le cas échéant E) d'autres produits auxiliaires et additifs connus dans l'industrie des vernis, les composants A), B) et C) étant présents en quantités correspondant à un rapport de 0,5:1 à 1,5:1 entre les équivalents de groupes iso-cyanates bloqués et les équivalents de groupes hydroxy, et caractérisé en ce qu'il contient en tant que composants liants essentiels
A) 56 à 86,9 % en poids d'un composant polyacrylate-polyol ayant un indice d'hydroxyle de 30 à 155 et une température de transition du second ordre de 30 à 120°C,
B) 0,1 à 9 % en poids d'un composant polyester-polyol ayant un indice d'hydroxyle de 40 à 180 et une température de transition du second ordre de -40 à 80°C et

C) 13 à 35 % en poids d'un composant polyisocyanate ayant une température de transition du second ordre de -40 à 60°C et consistant en au moins un polyisocyanate bloqué par une cétoxime et choisi dans le groupe consistant en (i) les polyisocyanates pour vernis à base du 1,6-diisocyanatohexane, contenant des groupes biuret, isocyanurate, uret-dione et/ou uréthane, (ii) les polyisocyanates pour vernis à base de mélanges du 1,6-diisocyanatohexane et du 1-isocyanato-3,3,5-triméthyl-5-isocyanatohexylcyclohexane et contenant des groupes isocyanurates et le cas échéant des groupes uretdiones, et (iii) les polyisocyanates pour vernis à base du 4,4'-diisocyanatodicyclohexylméthane, contenant des groupes uréthanes,

les pourcentage indiqués pour A) à C) se complétant à 100.

2. Vernis en poudre selon la revendication 1, caractérisé en ce que le composant A) consiste en un copolymère à fonctions hydroxy de

a) 0 à 70 parties en poids de méthacrylate de méthyle,

b) 0 à 60 parties en poids d'esters (cyclo)alkyliques de l'acide acrylique et/ou méthacrylique, contenant 2 à 18 atomes de carbone dans le groupe alkyle ou cycloalkyle,

c) 0 à 50 parties en poids de composés vinylaromatiques,

d) 6 à 40 parties en poids d'esters hydroxyalkyliques de l'acide acrylique et/ou méthacrylique,

e) 0 à 5 parties en poids d'acides carboxyliques à insaturation oléfinique,

la somme des parties en poids des composants a) à e) étant égale à 100.

3. Vernis en poudre selon les revendications 1 et 2, caractérisé en ce que le composant A) consiste essentiellement en un copolymère de

a) 10 à 60 parties en poids de méthacrylate de méthyle,

b) 5 à 50 parties en poids d'esters (cyclo)alkyliques de l'acide acrylique et/ou méthacrylique contenant 2 à 18 atomes de carbone dans le groupe (cyclo)alkyle,

c) 5 à 40 parties en poids de composés vinylaromatiques,

d) 10 à 35 parties en poids d'esters hydroxyalkyliques de l'acide acrylique et/ou méthacrylique et

e) 0 à 5,0 % en parties en poids d'acide acrylique et/ou méthacrylique,

la somme des parties en poids des composants a) à e) étant égale à 100.

4. Vernis en poudre selon les revendications 1 à 3, caractérisé en ce que le composant polyesteropolyol B) consiste en au moins un polyester à fonctions hydroxy, ayant un poids moléculaire moyen, moyenne en nombre, de 500 à 4000, un indice d'hydroxyle de 40 180 avec un indice d'acide inférieur à 12 et une température de transition du second ordre de -40 à +80°C.

5. Vernis en poudre selon les revendications 1 à 4, caractérisé en ce que le composant C) contient de 5 à 20 % en poids de groupes isocyanates bloqués par une cétoxime (exprimés en NCO) et à une fonctionnalité (moyenne) en groupes NCO de 2,0 à 5,0.

6. Vernis en poudre selon les revendications 1 à 5, caractérisé en ce que le composant C) consiste en au moins un polyisocyanate bloqué choisi dans le groupe formé par les polyisocyanates biurets à base de l'hexaméthylènediisocyanate, les polyisocyanates isocyanurates à base de l'hexaméthylènediisocyanate et les polyisocyanates à groupes uréthanes à base du 4,4'-diisocyanatodicyclohexylméthane, tous sous forme bloquée par la butanonoxime.

7. Vernis en poudre selon les revendications 1 à 6, caractérisé en ce que le composant D) consiste en octanoate stanneux et/ou dilaurate de dibutylétain(IV).

8. Vernis en poudre selon les revendications 1 à 7, caractérisé en ce que les additifs E) consistent en agents d'étalement et agents de protection contre la lumière, le cas échéant avec d'autres produits auxiliaires et additifs.

9. Procédé de préparation des vernis en poudre selon les revendications 1 à 8, caractérisé en ce que l'on met les composants A), B), C), D) et le cas échéant E) à l'état de solution et/ou de dispersion homogène dans un solvant ou mélange solvant inerte ayant un point ou intervalle d'ébullition situé entre 50 et 150°C, on débarrasse ensuite la solution et/ou dispersion obtenue du solvant ou milieu de dispersion et simultanément et/ou à la suite, on met la matière solide obtenue à l'état de poudre.

**10.** Utilisation des vernis en poudre selon les revendications 1 à 8, le cas échéant après mélange avec d'autres produits auxiliaires et additifs, pour l'application de revêtements sur des supports quelconques résistant à la chaleur par les techniques habituelles d'application des vernis en poudre, et en particulier pour l'application de vernis clairs sur des pièces de carrosseries d'automobiles.